# EUROPEAN PATENT SPECIFICATION

(11) **EP 3 451 193 B1**
(45) Date of publication and mention of the grant of the patent: **08.09.2021**
(21) Application number: 17807001.7
(22) Date of filing: 31.05.2017
(51) Int. Cl.: G06F 11/14, G06F 12/06, G06F 16/18, G06F 16/00

(54) **ELECTRONIC DEVICE AND FILE DATA JOURNALING METHOD OF ELECTRONIC DEVICE**
ELEKTRONISCHE VORRICHTUNG UND DATEIDATENAUFZEICHNUNGSVERFAHREN EINER ELEKTRONISCHEN VORRICHTUNG
DISPOSITIF ÉLECTRONIQUE ET PROCÉDÉ DE JOURNALISATION DE DONNÉES DE FICHIER DE DISPOSITIF ÉLECTRONIQUE

(30) Priority: 01.06.2016 KR 20160068358
(43) Date of publication of application: 06.03.2019
(73) Proprietor: Samsung Electronics Co., Ltd., Suwon-si, Gyeonggi-do 16677 (KR)
(72) Inventor: JEONG, Daeho, Hwaseong-si Gyeonggi-do 16677 (KR); GIL, Yeongjin, Suwon-si Gyeonggi-do 16677 (KR); WOO, Hobin, Suwon-si Gyeonggi-do 16677 (KR); YUN, Sunghwan, Suwon-si Gyeonggi-do 1677 (KR); LEE, Kitae, Suwon-si Gyeonggi-do 16677 (KR); LEE, Woojoong, Suwon-si Gyeonggi-do 16677 (KR); KIM, Minjung, Suwon-si Gyeonggi-do 16677 (KR)
(74) Representative: Hylarides, Paul Jacques
(86) International application number: PCT/KR2017/005682
(87) International publication number: WO 2017/209508

(56) References cited:
- WO-A1-2008/051590
- JP-A- 2015 043 178
- KR-A- 20140 118 519
- KR-A- 20150 018 682
- KR-A- 20150 141 073
- KR-A- 20160 002 109
- US-A1- 2015 356 112

## Description

### [Technical Field]

The disclosure relates to an electronic device, and more particularly, to an electronic device that is capable of journaling file data.

### [Background Art]

Portable electronic devices (hereinafter, electronic devices) such as a smart phone, a tablet, and the like may store various data in order to provide various user experiences. In order to utilize various data, an electronic device may include a storage device hierarchy including a main memory (e.g., random access memory (RAM)) and a storage which is a huge capacity storage device, like the conventional computer system. Various data may configure a file system in a directory structure.

While the electronic device operates, the file system may be corrected by reflecting a change in a file and/or a directory. When interruption is caused due to an unexpected power problem or system crash occurring in the electronic device, a part of data of the file system may be corrupted. Normally, the electronic device may implement a journaling file system in order to cope with the situation. The journaling file system is a file system used for tracking changes by logging changes in a memory before the changes are reflected in a main file system.

WO2008/051590A1 in accordance with its abstract discloses a method and system for a combined journaling and non-journaling file system. Data is stored on a first storage media using a first device in a format associated with a file system, wherein the file system is a non-journaling file system. Journal information associated with the file system is stored on a second storage media in the first device, wherein the journal information is distinct from the file system and the data is readable by other devices having a file system compatible with the file system.

US2015/0356112A1 in accordance with its abstract discloses an electronic device including a memory configured to store a file, a storage configured to support journaling of the file stored in the memory, and a data processing module configured to process a journaling method of the file in one mode of a writeback mode and an ordered mode in correspondence to at least one of a property of an application relating to the file and a property of the file.

### [Disclosure of Invention]

The invention is defined by the subject-matter of the appended independent claims. Further advantageous embodiments are defined by the dependent claims.

### [Technical Problem]

File data may be updated every time an operation is performed, and a journaling file system of the conventional electronic device performs journaling every time an operation is performed. In this instance, journaling may primarily cause input/output (I/O) in a storage, and may induce secondary I/O in a main file system. Accordingly, excessively caused I/O in the storage may deteriorate the performance and the life of the storage.

An aspect of the disclosure is to prevent deterioration in the performance and the life of a storage by selectively journaling file data and decreasing the I/O in the storage.

### [Solution to Problem]

In accordance with an aspect of the disclosure, there is provided an electronic device, including a first memory storing file data, a second memory having an attribute different from that of the first memory, and a processor. The processor is configured to perform: storing journal data related to a change in at least a part of the file data in the second memory; and updating at least the part of the file data stored in the first memory based at least on the journal data if a designated condition is satisfied, wherein the processor is configured to store, in the second memory: journal data related to a change in at least a part of a data block and metadata of the file data if the file data corresponds to a designated attribute; or journal data related to a change in at least a part of metadata of the file data if the file data does not correspond to the designated attribute.

In accordance with an aspect of the disclosure, there is provided a method of journaling file data by an electronic device, including: detecting a change in at least a part of file data stored in a first memory; storing journal data related to the change in a second memory having an attribute different from that of the first memory; and if a designated condition is satisfied, updating at least the part of the file data stored in the first memory, based at least on the journal data. The method further comprises determining whether the file data corresponds to a designated attribute, wherein the storing comprises storing, in the second memory: journal data related to a change in at least a part of a data block and metadata of the file data if the file data corresponds to the designated attribute; or journal data related to a change in at least a part of metadata of the file data if the file data does not correspond to the designated attribute.

### [Advantageous Effects of Invention]

According to the disclosure, selectively journaling file data may decrease I/O in a storage, whereby deterioration in the performance and the life of the storage may be prevented.

### [Brief Description of Drawings]

FIG. 1 is a diagram illustrating an electronic device in a network environment according to various embodiments;
FIG. 2 is a block diagram of an electronic device according to various embodiments;
FIG. 3 is a block diagram of a program module according to various embodiments;
FIG. 4 is a block diagram of an electronic device according to various embodiments of the disclosure;
FIG. 5 illustrates a program module according to one of the various embodiments of the disclosure;
FIG. 6 illustrates a program module according to one of the various embodiments of the disclosure;
FIG. 7 is a diagram illustrating data stored in a first memory and a second memory according to various embodiments;
FIGs. 8A and 8B are diagrams illustrating a checkpoint operation according to some of the various embodiments of the disclosure;
FIGs. 9A and 9B are diagrams illustrating a checkpoint operation according to some of the various embodiments of the disclosure;
FIG. 10 is a diagram illustrating time points for checkpointing according to various embodiments of the disclosure;
FIG. 11 is a flowchart of a file data journaling method of an electronic device according to various embodiments of the disclosure; and
FIG. 12 is a flowchart of a file data journaling method of an electronic device according to various embodiments of the disclosure.

### [Best Mode for Carrying out the Invention]

Hereinafter, example embodiments of the present disclosure are described in greater detail with reference to the accompanying drawings. While the present disclosure may be embodied in many different forms, specific embodiments of the present disclosure are illustrated in drawings and are described herein in detail, with the understanding that the present disclosure is to be considered as an example of the principles of the disclosure and is not intended to limit the disclosure to the specific embodiments illustrated. The same reference numbers are used throughout the drawings to refer to the same or like parts.

An expression "comprising" or "may comprise" used in the present disclosure indicates presence of a corresponding function, operation, or element and does not limit additional at least one function, operation, or element. Further, in the present disclosure, a term "comprise" or "have" indicates presence of a characteristic, numeral, step, operation, element, component, or combination thereof described in the disclosure and does not exclude presence or addition of at least one other characteristic, numeral, step, operation, element, component, or combination thereof.

In the present disclosure, an expression "or" includes any combination or the entire combination of together listed words. For example, "A or B" may include A, B, or A and B.

An expression of a first and a second in the present disclosure may represent various elements of the present disclosure, but do not limit corresponding elements. For example, the expression does not limit order and/or importance of corresponding elements. The expression may be used for distinguishing one element from another element. For example, both a first user device and a second user device are user devices and represent different user devices. For example, a first constituent element may be referred to as a second constituent element without deviating from the scope of the present disclosure, and similarly, a second constituent element may be referred to as a first constituent element.

When it is described that an element is "coupled" to another element, the element may be "directly coupled" to the other element or "electrically coupled" to the other element through a third element. However, when it is described that an element is "directly coupled" to another element, no element may exist between the element and the other element.

Terms used in the present disclosure are not to limit the present disclosure but to illustrate example embodiments. When using in a description of the present disclosure and the appended claims, a singular form includes a plurality of forms unless it is explicitly differently represented.

Unless differently defined, entire terms including a technical term and a scientific term used here have the same meaning as a meaning that may be generally understood by a person of common skill in the art. It should be understood that generally using terms defined in a dictionary have a meaning corresponding to that of a context of related technology and are not analyzed as an ideal or excessively formal meaning unless explicitly defined.

In this disclosure, an electronic device may be a device that involves a communication function. For example, an electronic device may be a smart phone, a tablet PC (Personal Computer), a mobile phone, a video phone, an e-book reader, a desktop PC, a laptop PC, a netbook computer, a PDA (Personal Digital Assistant), a PMP (Portable Multimedia Player), an MP3 player, a portable medical device, a digital camera, or a wearable device (e.g., an HMD (Head-Mounted Device) such as electronic glasses, electronic clothes, an electronic bracelet, an electronic necklace, an electronic accessory, or a smart watch), or the like, but is not limited thereto.

According to some embodiments, an electronic device may be a smart home appliance that involves a communication function. For example, an electronic device may be a TV, a DVD (Digital Video Disk) player, audio equipment, a refrigerator, an air conditioner, a vacuum cleaner, an oven, a microwave, a washing machine, an air cleaner, a set-top box, a TV box (e.g., Samsung HomeSyncTM, Apple TVTM, Google TVTM, etc.), a game console, an electronic dictionary, an electronic key, a camcorder, or an electronic picture frame.

According to some embodiments, an electronic device may be a medical device (e.g., MRA (Magnetic Resonance Angiography), MRI (Magnetic Resonance Imaging), CT (Computed Tomography), ultrasonography, etc.), a navigation device, a GPS (Global Positioning System) receiver, an EDR (Event Data Recorder), an FDR (Flight Data Recorder), a car infotainment device, electronic equipment for ship (e.g., a marine navigation system, a gyrocompass, etc.), avionics, security equipment, or an industrial or home robot, or the like, but is not limited thereto. According to some embodiments, an electronic device may be furniture or part of a building or construction having a communication function, an electronic board, an electronic signature receiving device, a projector, or various measuring instruments (e.g., a water meter, an electric meter, a gas meter, a wave meter, etc.), or the like, but is not limited thereto. An electronic device disclosed herein may be one of the above-mentioned devices or any combination thereof. As well understood by those skilled in the art, the above-mentioned electronic devices are examples only and not to be considered as a limitation of this disclosure.

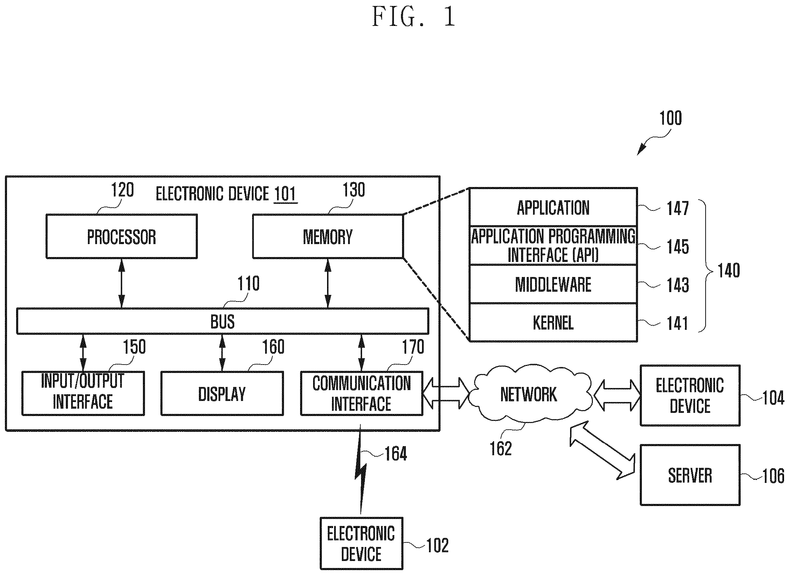

FIG. 1 is a block diagram illustrating an example electronic apparatus in a network environment according to an example embodiment of the present disclosure.

Referring to FIG. 1, the electronic apparatus 101 may include a bus 110, a processor (e.g., including processing circuitry) 120, a memory 130, an input/output interface (e.g., including input/output circuitry) 150, a display 160, and a communication interface (e.g., including communication circuitry) 170.

The bus 110 may be a circuit for interconnecting elements described above and for allowing a communication, e.g. by transferring a control message, between the elements described above.

The processor 120 can receive commands from the above-mentioned other elements, e.g. the memory 130, the input/output interface 150, the display 160, and the communication interface 170, through, for example, the bus 110, can decipher the received commands, and perform operations and/or data processing according to the deciphered commands.

The memory 130 can store commands received from the processor 120 and/or other elements, e.g. the input/output interface 150, the display 160, and the communication interface 170, and/or commands and/or data generated by the processor 120 and/or other elements. The memory 130 may include softwares and/or programs 140, such as a kernel 141, middleware 143, an Application Programming Interface (API) 145, and an application 147. Each of the programming modules described above may be configured by software, firmware, hardware, and/or combinations of two or more thereof.

The kernel 141 can control and/or manage system resources, e.g. the bus 110, the processor 120 or the memory 130, used for execution of operations and/or functions implemented in other programming modules, such as the middleware 143, the API 145, and/or the application 147. Further, the kernel 141 can provide an interface through which the middleware 143, the API 145, and/or the application 147 can access and then control and/or manage an individual element of the electronic apparatus 101.

The middleware 143 can perform a relay function which allows the API 145 and/or the application 147 to communicate with and exchange data with the kernel 141. Further, in relation to operation requests received from at least one of an application 147, the middleware 143 can perform load balancing in relation to the operation requests by, for example, giving a priority in using a system resource, e.g. the bus 110, the processor 120, and/or the memory 130, of the electronic apparatus 101 to at least one application from among the at least one of the application 147.

The API 145 is an interface through which the application 147 can control a function provided by the kernel 141 and/or the middleware 143, and may include, for example, at least one interface or function for file control, window control, image processing, and/or character control.

The input/output interface 150 may include various input/output circuitry and can receive, for example, a command and/or data from a user, and transfer the received command and/or data to the processor 120 and/or the memory 130 through the bus 110. The display 160 can display an image, a video, and/or data to a user.

The communication interface 170 can establish a communication between the electronic apparatus 101 and another electronic devices 102 and 104 and/or a server 106. The communication interface 170 can support short range communication protocols 164, e.g. a Wireless Fidelity (WiFi) protocol, a BlueTooth (BT) protocol, and a Near Field Communication (NFC) protocol, communication networks, e.g. Internet, Local Area Network (LAN), Wire Area Network (WAN), a telecommunication network, a cellular network, and a satellite network, or a Plain Old Telephone Service (POTS), or any other similar and/or suitable communication networks, such as network 162, or the like. Each of the electronic devices102 and 104 may be a same type and/or different types of electronic apparatus.

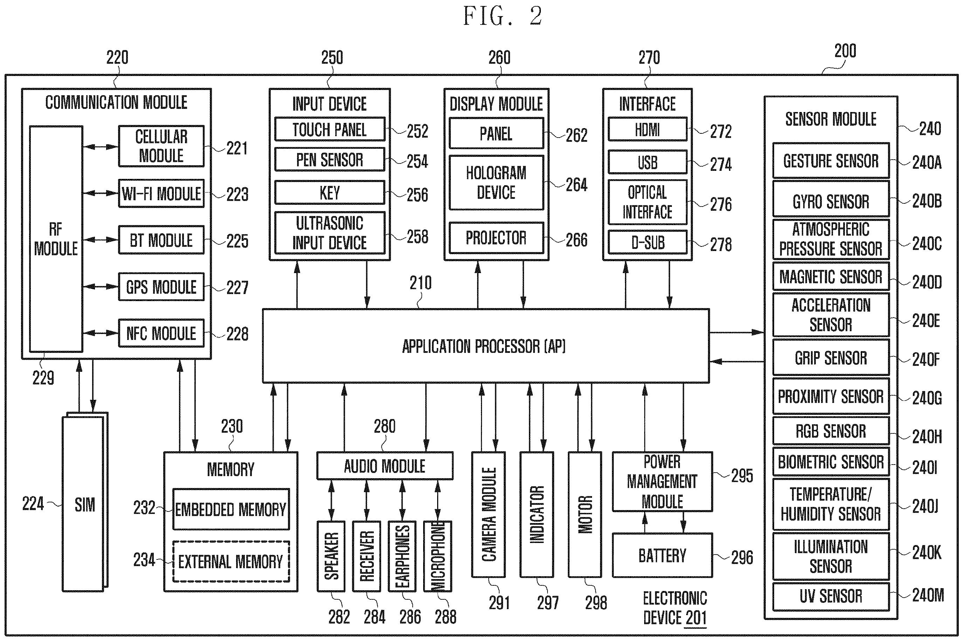

FIG. 2 is a block diagram illustrating an example electronic device 201 in accordance with an example embodiment of the present disclosure. The electronic device 201 may form, for example, the whole or part of the electronic device 101 shown in FIG. 1. Referring to FIG. 2, the electronic device 201 may include at least one application processor (AP) (e.g., including processing circuitry) 210, a communication module (e.g., including communication circuitry) 220, a subscriber identification module (SIM) card 224, a memory 230, a sensor module 240, an input device (e.g., including input circuitry) 250, a display 260, an interface (e.g., including interface circuitry) 270, an audio module 280, a camera module 291, a power management module 295, a battery 296, an indicator 297, and a motor 298.

The AP 210 may include various processing circuitry, and drive an operating system or applications, control a plurality of hardware or software components connected thereto, and also perform processing and operation for various data including multimedia data. The AP 210 may be formed of system-on-chip (SoC), for example. According to an embodiment, the AP 210 may further include a graphic processing unit (GPU) (not shown).

The communication module 220 (e.g., the communication interface 170) may perform a data communication with any other electronic device (e.g., the electronic device 104 or the server 106) connected to the electronic device 101 (e.g., the electronic device 201) through the network.

According to an embodiment, the communication module 220 may include various communication circuitry, such as, for example, and without limitation, a cellular module 221, a WiFi module 223, a BT module 225, a GPS module 227, an NFC module 228, and an RF (Radio Frequency) module 229.

The cellular module 221 may offer a voice call, a video call, a message service, an internet service, or the like through a communication network (e.g., LTE, LTE-A, CDMA, WCDMA, UMTS, WiBro, or GSM, etc.). Additionally, the cellular module 221 may perform identification and authentication of the electronic device in the communication network, using the SIM card 224. According to an embodiment, the cellular module 221 may perform at least part of functions the AP 210 can provide. For example, the cellular module 221 may perform at least part of a multimedia control function.

According to an embodiment, the cellular module 221 may include a communication processor (CP). Additionally, the cellular module 221 may be formed of SoC, for example. Although some elements such as the cellular module 221 (e.g., the CP), the memory 230, or the power management module 295 are shown as separate elements being different from the AP 210 in FIG. 2, the AP 210 may be formed to have at least part (e.g., the cellular module221) of the above elements in an embodiment.

According to an embodiment, the AP 210 or the cellular module 221 (e.g., the CP) may load commands or data, received from a nonvolatile memory connected thereto or from at least one of the other elements, into a volatile memory to process them. Additionally, the AP 210 or the cellular module 221 may store data, received from or created at one or more of the other elements, in the nonvolatile memory.

Each of the WiFi module 223, the BT module 225, the GPS module 227 and the NFC module 228 may include a processor for processing data transmitted or received therethrough. Although FIG. 2 shows the cellular module 221, the WiFi module 223, the BT module 225, the GPS module 227 and the NFC module 228 as different blocks, at least part of them may be contained in a single IC (Integrated Circuit) chip or a single IC package in an embodiment. For example, at least part (e.g., the CP corresponding to the cellular module 221 and a WiFi processor corresponding to the WiFi module 223) of respective processors corresponding to the cellular module 221, the WiFi module 223, the BT module 225, the GPS module 227 and the NFC module 228 may be formed as a single SoC.

The RF module 229 may transmit and receive data, e.g., RF signals or any other electric signals. Although not shown, the RF module 229 may include a transceiver, a PAM (Power Amp Module), a frequency filter, an LNA (Low Noise Amplifier), or the like. Also, the RF module 229 may include any component, e.g., a wire or a conductor, for transmission of electromagnetic waves in a free air space. Although FIG. 2 shows that the cellular module 221, the WiFi module 223, the BT module 225, the GPS module 227 and the NFC module 228 share the RF module 229, at least one of them may perform transmission and reception of RF signals through a separate RF module in an embodiment.

The SIM card 224 may be a specific card formed of SIM and may be inserted into a slot formed at a certain place of the electronic device 201. The SIM card 224 may contain therein an ICCID (Integrated Circuit Card IDentifier) or an IMSI (International Mobile Subscriber Identity).

The memory 230 (e.g., the memory 230) may include an internal memory 232 and/or an external memory 234. The internal memory 232 may include, for example, at least one of a volatile memory (e.g., DRAM (Dynamic RAM), SRAM (Static RAM), SDRAM (Synchronous DRAM), etc.) or a nonvolatile memory (e.g., OTPROM (One Time Programmable ROM), PROM (Programmable ROM), EPROM (Erasable and Programmable ROM), EEPROM (Electrically Erasable and Programmable ROM), mask ROM, flash ROM, NAND flash memory, NOR flash memory, etc.).

According to an embodiment, the internal memory 232 may have the form of an SSD (Solid State Drive). The external memory 234 may include a flash drive, e.g., CF (Compact Flash), SD (Secure Digital), Micro-SD (Micro Secure Digital), Mini-SD (Mini Secure Digital), xD (eXtreme Digital), memory stick, or the like. The external memory 234 may be functionally connected to the electronic device 201 through various interfaces. According to an embodiment, the electronic device 201 may further include a storage device or medium such as a hard drive.

The sensor module 240 may measure physical quantity or sense an operating status of the electronic device 201, and then convert measured or sensed information into electric signals. The sensor module 240 may include, for example, at least one of a gesture sensor 240A, a gyro sensor 240B, an atmospheric (e.g., barometer) sensor 240C, a magnetic sensor 240D, an acceleration sensor 240E, a grip sensor 240F, a proximity sensor 240G, a color sensor 240H (e.g., RGB (Red, Green, Blue) sensor), a biometric sensor 2401, a temperature-humidity sensor 240J, an illumination (e.g., illuminance/light) sensor 240K, and a UV (ultraviolet) sensor 240M. Additionally or alternatively, the sensor module 240 may include, e.g., an E-nose sensor (not shown), an EMG (electromyography) sensor (not shown), an EEG (electroencephalogram) sensor (not shown), an ECG (electrocardiogram) sensor (not shown), an IR (infrared) sensor (not shown), an iris scan sensor (not shown), or a finger scan sensor (not shown). Also, the sensor module 240 may include a control circuit for controlling one or more sensors equipped therein.

The input device 250 may include various input circuitry, such as, for example, and without limitation, a touch panel 252, a digital pen sensor 254, a key256, or an ultrasonic input unit 258. The touch panel 252 may recognize a touch input in a manner of capacitive type, resistive type, infrared type, or ultrasonic type. Also, the touch panel 252 may further include a control circuit. In case of a capacitive type, a physical contact or proximity may be recognized. The touch panel 252 may further include a tactile layer. In this case, the touch panel 252 may offer a tactile feedback to a user.

The digital pen sensor 254 may be formed in the same or similar manner as receiving a touch input or by using a separate recognition sheet. The key 256 may include, for example, a physical button, an optical key, or a keypad. The ultrasonic input unit 258 is a specific device capable of identifying data by sensing sound waves with a microphone 288 in the electronic device 201 through an input tool that generates ultrasonic signals, thus allowing wireless recognition. According to an embodiment, the electronic device 201 may receive a user input from any external device (e.g., a computer or a server) connected thereto through the communication module 220.

The display 260 (e.g., the display 250) may include a panel 262, a hologram 264, or a projector 266. The panel 262 may be, for example, LCD (Liquid Crystal Display), AM-OLED (Active Matrix Organic Light Emitting Diode), or the like. The panel 262 may have a flexible, transparent or wearable form. The panel 262 may be formed of a single module with the touch panel 252. The hologram 264 may show a stereoscopic image in the air using interference of light. The projector 266 may project an image onto a screen, which may be located at the inside or outside of the electronic device 201. According to an embodiment, the display 260 may further include a control circuit for controlling the panel 262, the hologram 264, and the projector 266.

The interface 270 may include various interface circuitry, such as, for example, and without limitation, an HDMI (High-Definition Multimedia Interface) 272, a USB (Universal Serial Bus) 274, an optical interface 276, or a D-sub (D-subminiature) 278. The interface 270 may be contained, for example, in the communication interface 260 shown in FIG. 2. Additionally or alternatively, the interface 270 may include, for example, an MHL (Mobile High-definition Link) interface, an SD (Secure Digital) card/MMC (Multi-Media Card) interface, or an IrDA (Infrared Data Association) interface.

The audio module 280 may perform a conversion between sounds and electric signals. The audio module 280 may process sound information inputted or outputted through a speaker 282, a receiver 284, an earphone 286, or a microphone 288.

The camera module 291 is a device capable of obtaining still images and moving images. According to an embodiment, the camera module 291 may include at least one image sensor (e.g., a front sensor or a rear sensor), a lens (not shown), an ISP (Image Signal Processor, not shown), or a flash (e.g., LED or xenon lamp, not shown).

The power management module 295 may manage electric power of the electronic device 201. Although not shown, the power management module 295 may include, for example, a PMIC (Power Management Integrated Circuit), a charger IC, or a battery or fuel gauge.

The PMIC may be formed, for example, of an IC chip or SoC. Charging may be performed in a wired or wireless manner. The charger IC may charge a battery 296 and prevent overvoltage or overcurrent from a charger. According to an embodiment, the charger IC may have a charger IC used for at least one of wired and wireless charging types. A wireless charging type may include, for example, a magnetic resonance type, a magnetic induction type, or an electromagnetic type. Any additional circuit for a wireless charging may be further used such as a coil loop, a resonance circuit, or a rectifier.

The battery gauge may measure the residual amount of the battery 296 and a voltage, current or temperature in a charging process. The battery 296 may store or create electric power therein and supply electric power to the electronic device 201. The battery 296 may be, for example, a rechargeable battery or a solar battery.

The indicator 297 may show thereon a current status (e.g., a booting status, a message status, or a recharging status) of the electronic device 201 or of its part (e.g., the AP 210). The motor 298 may convert an electric signal into a mechanical vibration. Although not shown, the electronic device 201 may include a specific processor (e.g., GPU) for supporting a mobile TV. This processor may process media data that comply with standards of DMB (Digital Multimedia Broadcasting), DVB (Digital Video Broadcasting), or media flow.

Each of the above-discussed elements of the electronic device disclosed herein may be formed of one or more components, and its name may be varied according to the type of the electronic device. The electronic device disclosed herein may be formed of at least one of the above-discussed elements without some elements or with additional other elements. Some of the elements may be integrated into a single entity that still performs the same functions as those of such elements before integrated.

The term "module" used in this disclosure may refer to a certain unit that includes one of hardware, software and firmware or any combination thereof. The module may be interchangeably used with unit, logic, logical block, component, or circuit, for example. The module may be the minimum unit, or part thereof, which performs one or more particular functions. The module may be formed mechanically or electronically. For example, the module disclosed herein may include at least one of a dedicated processor, a CPU, an ASIC (Application-Specific Integrated Circuit) chip, FPGAs (Field-Programmable Gate Arrays), and programmable-logic device, which have been known or are to be developed.

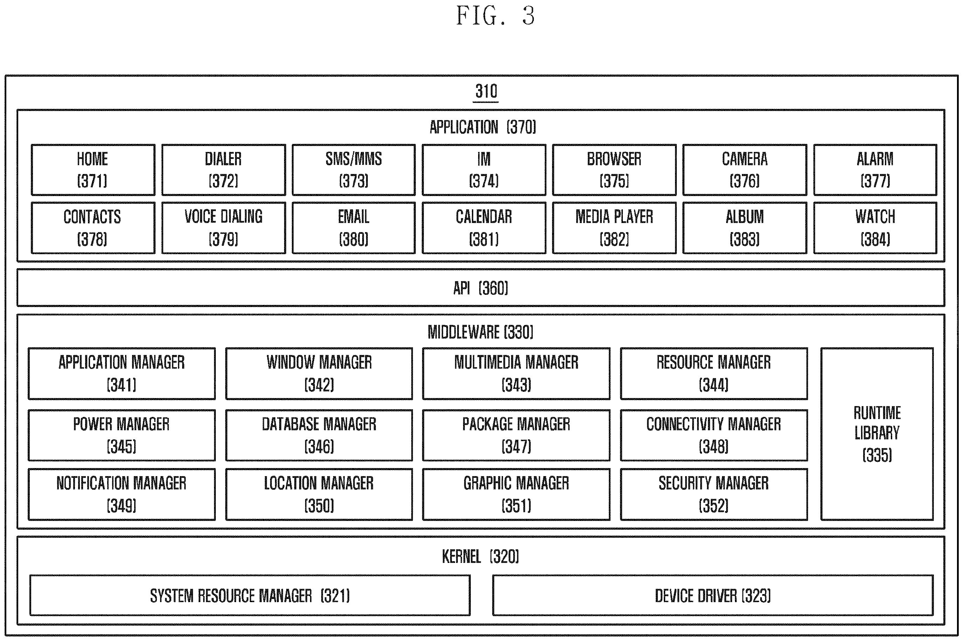

FIG. 3 is a block diagram illustrating an example configuration of a programming module 310 according to an example embodiment of the present disclosure.

The programming module 310 may be included (or stored) in the electronic device 201 (e.g., the memory 230) illustrated in FIG. 2 or may be included (or stored) in the electronic device 101 (e.g., the memory 130) illustrated in FIG. 1. At least a part of the programming module 310 may be implemented in software, firmware, hardware, or a combination of two or more thereof. The programming module 310 may be implemented in hardware, and may include an OS controlling resources related to an electronic device (e.g., the electronic device 101 or 201) and/or various applications (e.g., an application 370) executed in the OS. For example, the OS may be Android, iOS, Windows, Symbian, Tizen, Bada, and the like.

Referring to FIG. 3, the programming module 310 may include a kernel 320, a middleware 330, an API 360, and/or the application 370.

The kernel 320 (e.g., the kernel 141) may include a system resource manager 321 and/or a device driver 323. The system resource manager 321 may include, for example, a process manager (not illustrated), a memory manager (not illustrated), and a file system manager (not illustrated). The system resource manager 321 may perform the control, allocation, recovery, and/or the like of system resources. The device driver 323 may include, for example, a display driver (not illustrated), a camera driver (not illustrated), a Bluetooth driver (not illustrated), a shared memory driver (not illustrated), a USB driver (not illustrated), a keypad driver (not illustrated), a Wi-Fi driver (not illustrated), and/or an audio driver (not illustrated). Also, according to an embodiment of the present disclosure, the device driver 323 may include an Inter-Process Communication (IPC) driver (not illustrated).

As one of various embodiments of the present disclosure, the display driver may control at least one display driver IC (DDI). The display driver may include the functions for controlling the screen according to the request of the application 370.

The middleware 330 may include multiple modules previously implemented so as to provide a function used in common by the applications 370. Also, the middleware 330 may provide a function to the applications 370 through the API 360 in order to enable the applications 370 to efficiently use limited system resources within the electronic device. For example, as illustrated in FIG. 3, the middleware 330 (e.g., the middleware 143) may include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, a security manager 352, and any other suitable and/or similar manager.

The runtime library 335 may include, for example, a library module used by a complier, in order to add a new function by using a programming language during the execution of the application 370. According to an embodiment of the present disclosure, the runtime library 335 may perform functions which are related to input and output, the management of a memory, an arithmetic function, and/or the like.

The application manager 341 may manage, for example, a life cycle of at least one of the applications 370. The window manager 342 may manage GUI resources used on the screen. For example, when at least two displays 260 are connected, the screen may be differently configured or managed in response to the ratio of the screen or the action of the application 370. The multimedia manager 343 may detect a format used to reproduce various media files and may encode or decode a media file through a codec appropriate for the relevant format. The resource manager 344 may manage resources, such as a source code, a memory, a storage space, and/or the like of at least one of the applications 370.

The power manager 345 may operate together with a Basic Input/Output System (BIOS), may manage a battery or power, and may provide power information and the like used for an operation. The database manager 346 may manage a database in such a manner as to enable the generation, search and/or change of the database to be used by at least one of the applications 370. The package manager 347 may manage the installation and/or update of an application distributed in the form of a package file.

The connectivity manager 348 may manage a wireless connectivity such as, for example, Wi-Fi and Bluetooth. The notification manager 349 may display or report, to the user, an event such as an arrival message, an appointment, a proximity alarm, and the like in such a manner as not to disturb the user. The location manager 350 may manage location information of the electronic device. The graphic manager 351 may manage a graphic effect, which is to be provided to the user, and/or a user interface related to the graphic effect. The security manager 352 may provide various security functions used for system security, user authentication, and the like. According to an embodiment of the present disclosure, when the electronic device (e.g., the electronic device 201) has a telephone function, the middleware 330 may further include a telephony manager (not illustrated) for managing a voice telephony call function and/or a video telephony call function of the electronic device.

The middleware 330 may generate and use a new middleware module through various functional combinations of the above-described internal element modules. The middleware 330 may provide modules specialized according to types of OSs in order to provide differentiated functions. Also, the middleware 330 may dynamically delete some of the existing elements, or may add new elements. Accordingly, the middleware 330 may omit some of the elements described in the various embodiments of the present disclosure, may further include other elements, or may replace the some of the elements with elements, each of which performs a similar function and has a different name.

The API 360 (e.g., the API 145) is a set of API programming functions, and may be provided with a different configuration according to an OS. In the case of Android or iOS, for example, one API set may be provided to each platform. In the case of Tizen, for example, two or more API sets may be provided to each platform.

The applications 370 (e.g., the applications 147) may include, for example, a preloaded application and/or a third party application. The applications 370 (e.g., the applications 147) may include, for example, a home application 371, a dialer application 372, a Short Message Service (SMS)/Multimedia Message Service (MMS) application 373, an Instant Message (IM) application 374, a browser application 375, a camera application 376, an alarm application 377, a contact application 378, a voice dial application 379, an electronic mail (e-mail) application 380, a calendar application 381, a media player application 382, an album application 383, a clock application 384, and any other suitable and/or similar application.

At least a part of the programming module 310 may be implemented by instructions stored in a non-transitory computer-readable storage medium. When the instructions are executed by one or more processors (e.g., the application processor 210), the one or more processors may perform functions corresponding to the instructions. The non-transitory computer-readable storage medium may be, for example, the memory 220. At least a part of the programming module 310 may be implemented (e.g., executed) by, for example, the one or more processors. At least a part of the programming module 310 may include, for example, a module, a program, a routine, a set of instructions, and/or a process for performing one or more functions.

According to various embodiments of the disclosure, a journaling file system is a file system used for tracking changes by logging changes in a memory before the changes are reflected in a main file system. Journal data may include data related to a change in file data.

According to various embodiments of the disclosure, the file data may include metadata and a data block. The data block is configured with real data that the corresponding file data includes, and the metadata may include information related to the data block. According to various embodiments, an electronic device may generate a change in metadata and/or a change in a data block as journal data.

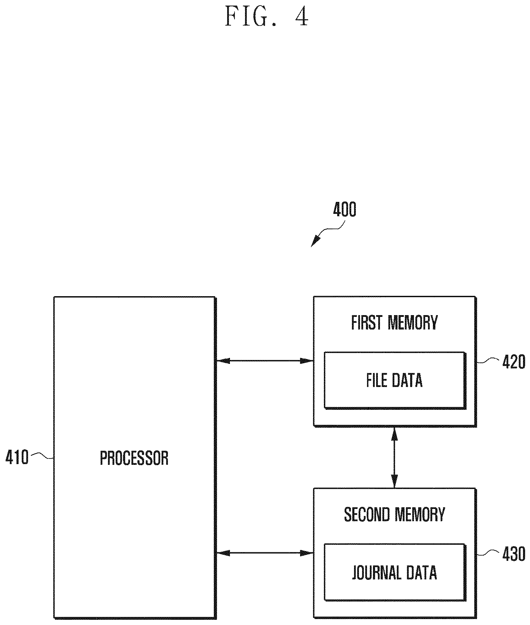

FIG. 4 is a block diagram of an electronic device according to various embodiments of the disclosure.

As illustrated in FIG. 4, an electronic device 400 may include a processor 410, a first memory 420, and a second memory 430. Although at least some of the illustrated elements are omitted or replaced, various embodiments of the disclosure will be implemented without difficulty. The electronic device 400 may include at least some of the elements of the electronic device 101 of FIG. 1 and/or the electronic device 201 of FIG. 2.

The processor 410 may be an element configured to control each element of the electronic device 400 and/or to perform operation or data processing relevant to communication, and may be electrically connected to various elements of the electronic device 400, including the first memory 420 and the second memory 430. The processor 410 may include at least some of the elements of the processor 120 of FIG. 1 and/or the application processor 210 of FIG. 2, or may perform at least some of the functions of the processor 120 of FIG. 1 and/or the application processor 210 of FIG. 2. The operations of the processor 410 may be performed by loading instructions stored in the first memory 420 or the second memory 430.

In the present specification, the processor 410's function of journaling file data according to various embodiments will be described in detail. In addition, descriptions of the well-known art that the processor 410 may perform will be omitted. The journaling related operations of the processor 410 may be performed by a journaling module in a file system manager included in a program module.

The first memory 420, which is a non-volatile memory, may be a large capacity storage device. For example, the first memory 420 may include at least one from among an one-time programmable ROM (OTPROM), a PROM, an EPROM, an EEPROM, a mask ROM, a flash ROM, a flash memory, a hard drive, and a solid state drive (SSD). The first memory 420 may store various pieces of file data, and the stored file data may be updated as the processor 410 operates.

The second memory 430 may be a memory having an attribute different from that of the first memory 420. According to various embodiments, at least a part of the second memory 430 may be allocated as a main memory, and the processor 410 may load or store file data of the first memory 420 in the second memory 430, and may perform operation associated with the file data. According to various embodiments, at least a part of the second memory 430 may be allocated as a storage device, and the processor 410 may store, in the second memory 430, file journal data corresponding to the file data of the first memory 420. Generally, the type of memory used for a main memory is a volatile memory such as a dynamic random access memory (DRAM), a static RAM (SRAM), a synchronous dynamic RAM (SDRAM), or the like. Therefore, when power supplied to an electronic device is blocked, recorded data may be deleted. According to various embodiments of the disclosure, however, the second memory 430, which is the main memory, may at least temporarily preserve data although sudden power off of the electronic device 400 occurs. For example, the second memory 430 may be a part of a battery integrated electronic device and may be continuously provided with power, may be provided with power from an auxiliary battery when the electronic device is powered off since the second memory 430 contains a separate auxiliary battery, may be an RAM having a feature of at least temporarily preserving data, or may be a non-volatile RAM (NVRAM) which is a non-volatile memory.

According to various embodiments, a part of the second memory 430 may be a designated area for journaling. The designated area may be designated by a physical or virtual address of the second memory 430. According to an embodiment, the second memory 430 may include a plurality of memories, and the plurality of memories may be of a type that is the same as, or different from, each other.

According to various embodiments, the electronic device 400 may journal file data stored in the first memory 420. The processor 410 may be configured to generate journal data related to a change in at least a part of the file data stored in the first memory 420, to store the generated journal data in the second memory 430, and to update at least a part of file data stored in the first memory 420 if a designated condition is satisfied. Here, the designated condition may include, for example, the case in which power supply to the electronic device 400 is suddenly blocked, or system crash occurs.

The journaling file system may be a file system used for tracking a change by logging a change in a memory before the change is reflected in a main file system. When power off, system crash, or the like occurs, the journaling file system may further quickly switch a file system to an online state using journal data, and may reduce the possibility of file data corruption.

According to various embodiments, the electronic device 400 journals only metadata included in file data, or may journal the whole file data including metadata and a data block. In a normal journaling mode that journals only the metadata of the file system, the integrity of a data block which corresponds to a normal data area is not secured but the integrity of the metadata may be secured by preventing discordance in the metadata of the file system. In a data journaling mode that journals the whole file data, the integrity of the whole data may be secured but the size of a journaling area of the second memory 430 may be necessarily limited, which causes drawback. Accordingly, according to various embodiments of the disclosure, the whole file data of file data corresponding to a designated attribute is journaled. For the remaining file data, journal data may be generated only for a change in metadata.

The operation in which the processor 410 stores journal data in the second memory 430 may be a commit operation. The commit operation may be an operation of recording file data which are to be journaled, in the journaling area of the second memory 430 in units of transactions.

The processor 410 may perform a checkpoint operation that records journal data, which is completely committed and recorded in the journaling area in units of transactions, in a main file system area of the first memory 420. As the checkpoint operation is performed, journaling related logs which are recorded in the journaling area of the second memory 430 may be changed to a state that allows deletion. Generally, the checkpoint operation may be performed when a journaling space or the available space of the whole main memory is insufficient or when a predetermined period of time (e.g., a dirty expiration time, a predetermined period of time may be set to 2 seconds in some operating systems) elapses after file data are corrected in the main memory. The checkpoint operation may cause I/O in the first memory 420, and the I/O that is excessively performed in the first memory 420 due to frequent checkpoint operation may deteriorate the performance and the life of the first memory 420. Accordingly, the electronic device 400 according to various embodiments may maximally delay a time point for checkpointing, so as to minimize the I/O caused in the first memory 420.

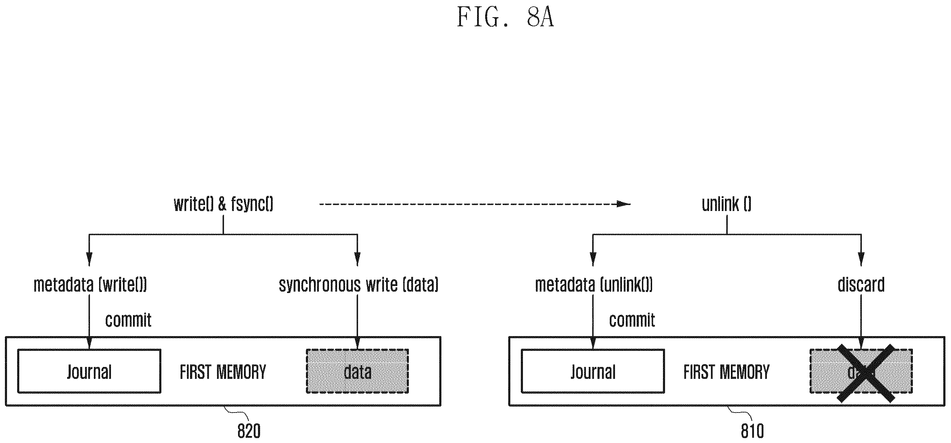

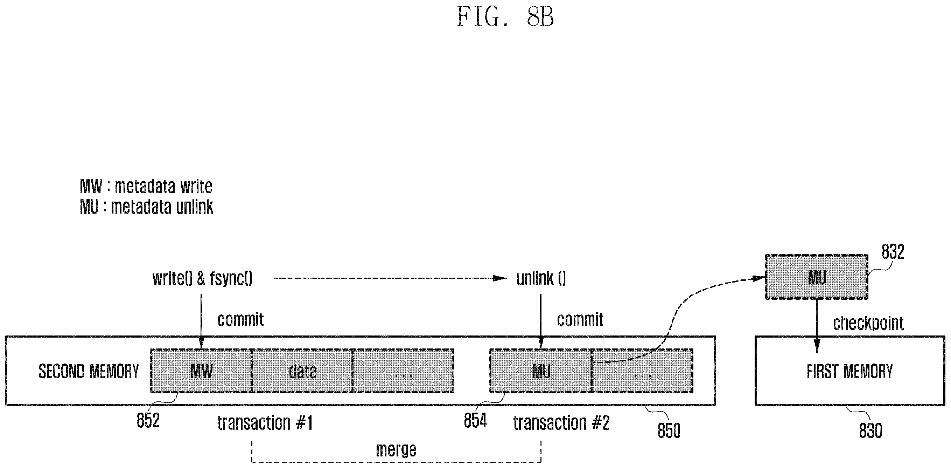

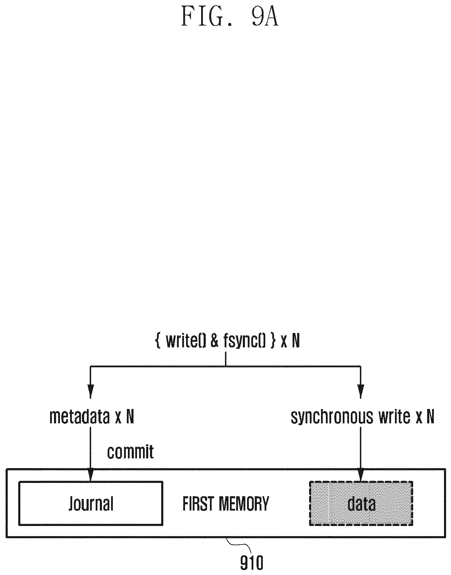

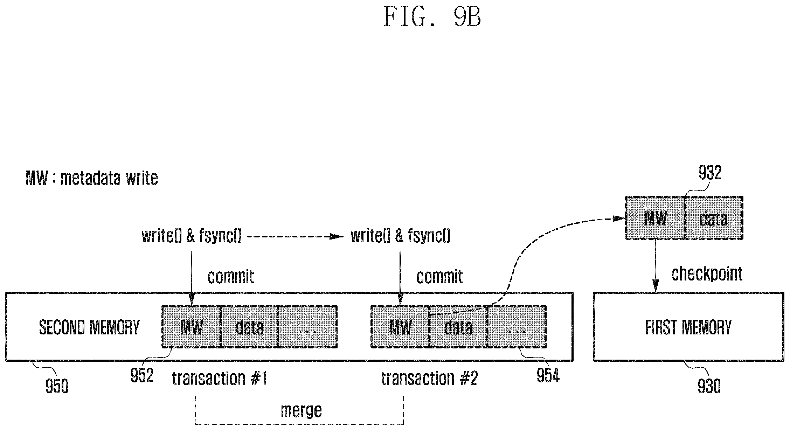

According to various embodiments, if file data (or journal data) corresponds to a designated attribute, the processor 410 may journal the corresponding file data in the data journaling mode. That is, the processor 410 may be configured to store, in the second memory 420, journal data related to a change in at least a part of a data block and metadata of the file data corresponding to the designated attribute. Here, the designated attribute may include, for example, the case in which a file deletion operation is performed after file update and synchronization of file data (or journal data) is performed, the case in which data at the same area of file data (or journal data) is repeatedly synchronized a plurality of times, or the like. According to an embodiment, the processor 410 may journal a file of which the file size is less than a predetermined threshold value, in the data journaling mode. According to an embodiment, the processor 410 may journal a file of which the file size is less than a predetermined threshold value from among file data corresponding to the designated attribute, in the data journaling mode. The operation will be described in detail with reference to FIGs. 8 and 9.

According to various embodiments, if file data does not correspond to the designated attribute, the processor 410 may perform journaling in the normal journaling mode. That is, the processor 410 may be configured to store, in the second memory, journal data related to a change in at least a part of metadata of the corresponding file data.

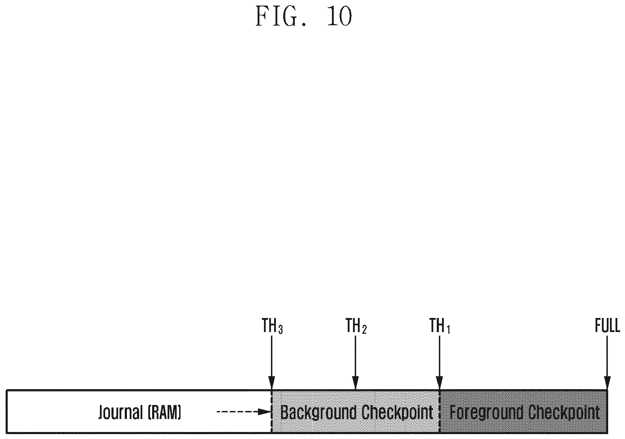

According to various embodiments, the processor 410 may checkpoint journal data according to the available capacity of the second memory 430. If the available capacity is within a first threshold value, the processor 410 may perform a foreground checkpoint. If the available capacity is within a second threshold value, the processor 410 may perform a background checkpoint. Checkpointing based on the available capacity of the second memory 430 will be described in detail with reference to FIG. 10.

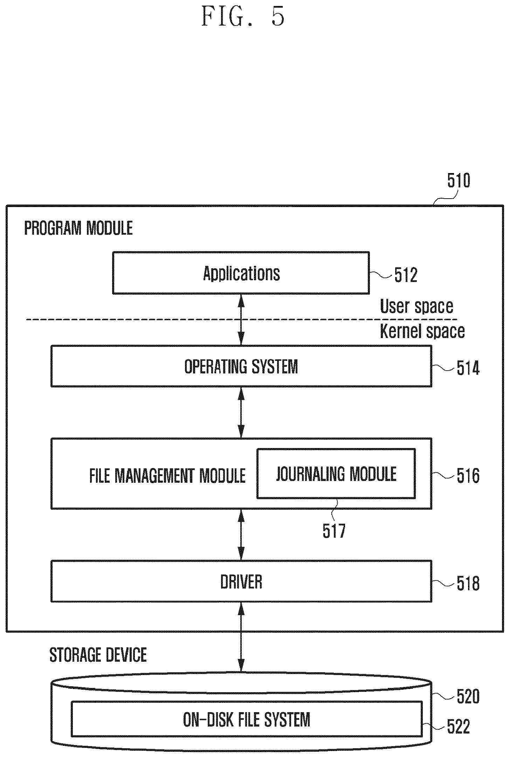

FIG. 5 illustrates a program module according to an embodiment among various embodiments of the disclosure.

FIG. 5 illustrates that a first memory for storing main file data and a second memory for storing journal data are implemented in one storage device 520 in a hardware plane.

As illustrated in FIG. 5, a program module 510 may be separated into a user space and a kernel space. The user space may include applications 512. The kernel space may include an operating system 514, a file management module 516, and a driver 518.

According to various embodiments, the file management module 516 including a journaling module 517 operates in the program module 510, and file system data and journal data may be stored in an on-disk file system 522 of the storage. The program module 510 is implemented in a main memory (system memory), and may cache or buffer file data and journal data.

The applications 512 may include a plurality of applications 512 operating in an electronic device. The applications 512 may read files from, and write files in the storage device 520 via the operating system 514. Various examples of the applications 512 exist. For example, a database management program may generate and manage, for example, a DB file, a DB backup file, or the like.

The operating system 514 is a core software layer that processes a system call related to a file system. The operating system 514 may provide a general-purpose interface between different file systems.

The file management module 516 may perform an operation of managing a file system. The file management module 516 is connected to the operating system 514, and may process an operation instruction, such as write, fsync, unlink, or the like, with respect to a file sent by the operating system 514. The file management module 516 may include the journaling module 517. The journaling module 517 may manage (generate and commit) journal data in units of transactions, and may control checkpoint time points of transactions.

The driver 518 may include a block device driver connected to the storage device 520. The driver 518 may be connected between the file system and the journaling module 517, such that data input/output corresponding to file input/output may be performed. The driver 518 may include a block layer that virtualizes a part of the storage device 520 as a block device.

In the structure of FIG. 5, the journaling module 517 may store journal data in the journaling area of the storage device 520. Every time that the file system performs an operation, this may be recorded in metadata and/or a data block of a corresponding file. When a file is changed due to each operation, the journaling module 517 may generate (and/or commit) journal data related to the change and may store the same in the storage device 520.

As described above, journal data generated as an operation is performed may cause primary I/O in the storage device 520 when a commit operation is performed, and may cause secondary I/O in the main file system when checkpointing is performed. Excessive I/O caused in the storage device 520 may deteriorate the performance and the life of the storage device 520.

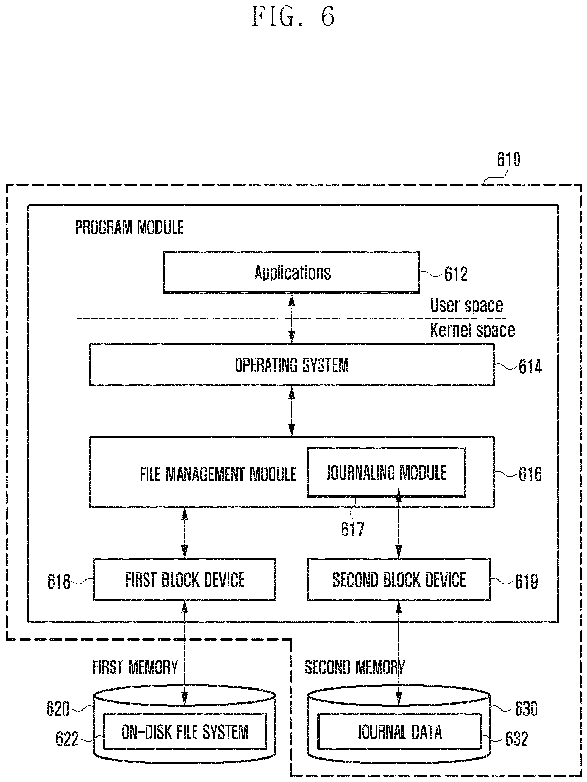

FIG. 6 illustrates a program module according to one of the various embodiments of the disclosure.

When compared to the embodiment of FIG. 5, the present embodiment shows that a first memory 620 and a second memory 630 which have different attributes from the perspective of hardware are included. A main file system 622 is stored in the first memory 620, and journal data may be stored in a journaling area 632 of the second memory 630. According to various embodiments, file data may be stored (or cached) in a file management module 616 of a program module 610. Journal data may be stored (or buffered) in a journaling module 617 in the file management module 616. Journal data buffered in the journaling module 617 may be stored in the second memory 630 via a commit operation. Subsequently, when a checkpoint operation is performed, file data which corresponds to the journal data and is cached in the file management module 616, may be stored in the main file system 622 of the first memory 620.

Applications 612 may select a file corresponding to a designated attribute from among a plurality of files in the file system, and may set a data journaling mode for the selected file. Here, the data journaling mode is a mode that journals the whole file data including a data block and metadata of the file system.

According to an embodiment, the applications 612 may set the data journaling mode, for example, an ioctl scheme for a file on which a file deletion operation is performed after file update and synchronization, a file of which the data at the same area of journal data is repeatedly synchronized a plurality of times, or a file of which the file size is less than a predetermined threshold value.

According to an embodiment, the applications, the applications 612 may set the data journaling mode for a file having a predetermined directory, a predetermined file name, or a predetermined extension. The file management module 616 may apply a suitable journaling mode for each file according to setting by the application 612.

The file on which a file deletion operation is performed after file update and synchronization is file backup data of a DB or the like, which is used for securing the integrity of a file in a database management program or the like. The file may include, for example, a delete mode and truncate mode DB rollback journal file of a database management program (e.g., SQLite), and a backup file having an extension named ".bak" of an Android AtomicFile class. Also, the data of which data at the same area is repeatedly synchronized a plurality of times may include, for example, a persist mode DB rollback journal file of a database management program, a write-ahead logging (WAL) mode DB journal file, a DB file, and an AtomicFile file of an Android AtomicFile class.

With respect to a file that does not correspond to the above-described designated attribute, the applications 612 may perform a journaling operation in the normal journaling mode that journals only metadata. According to an embodiment, the applications 612 may classify files to be journaled in the data journaling mode, based on the attribute of a file, such as an extension of a file or the like.

The operating system 614 is a core software layer that processes a system call related to a file system, and the operation of the operating system 614 may be the same as the embodiment of the operating system 514 of FIG. 5.

A first block device 618, which is a device driver connected to the first memory 620, is connected to a file system and may perform data input/output corresponding to file input/output. According to an embodiment, the first block device 618 may be generated by virtualizing a part of the first memory 620.

A second block device 619, which is a device driver connected to the second memory 630. According to an embodiment, the second block device 619 may be generated by virtualizing a part of the second memory 630.

The file management module 616 may include the journaling module 617. Journal data generated (or cached) in the journaling module 617 may be stored (or committed) in the journaling area 632 of the second memory 630 via the second block device 619. Also, a plurality of pieces of file data in the main file system may be stored (or checkpointed) in the main file system area 622 of the first memory 620, via the first block device 618. According to an embodiment, the journaling module 617 may control the time points for checkpointing of committed transactions, based on the available capacity of the second block device 619.

The processor may be configured to access journal data stored in the second memory 630 via the file management module 616.

According to various embodiments, the second memory 630 may perform the function of the main memory, but the second memory 630 may be capable of preserving data as it is during at least a predetermined period of time although sudden power off occurs in an electronic device, unlike the conventional electronic device. For example, the second memory 630 may be a part of a battery integrated electronic device and is continuously provided with power, may be provided with power from an auxiliary battery although power of the electronic device is turned off since the second memory 630 separately contains the auxiliary battery, may be an RAM having a feature of at least temporarily preserving data, or may be a non-volatile RAM (NVRAM) which is a non-volatile memory.

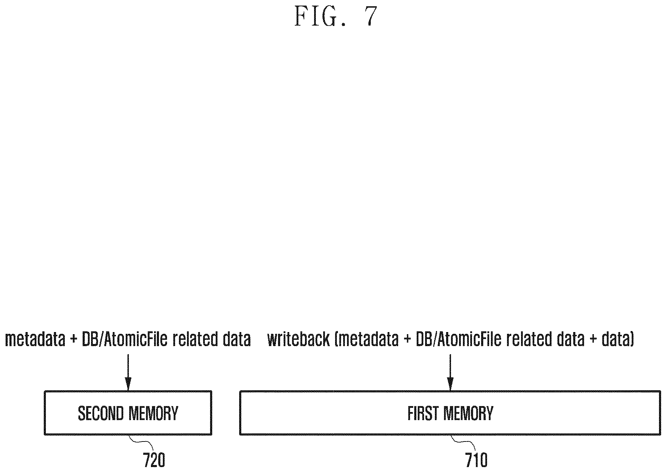

FIG. 7 is a diagram illustrating data stored in a first memory and a second memory according to various embodiments.

According to various embodiments, a first memory 710, which is a non-volatile memory, may be a large capacity storage device. Also, a second memory 720, which is a memory that stores main memory, may have an attribute different from that of the first memory 710.

File data may be stored in the first memory 710. A processor may store (or commit), in the second memory 720, journal data related to a change in the file data stored in the first memory 710. As illustrated in FIG. 7, the second memory 720 may store at least a part (data related to DB/AtomicFile) of a data block and metadata. When a designated interruption (e.g., sudden power off) occurs, file data of the first memory 710 may be updated (or recovered) based on the journal data stored in the second memory 720.

According to an embodiment, the second memory 720 may include a first area for journaling and a second area which is physically or logically separated from the first area. When generating journal data, the processor may buffer at least a part of the journal data in the first area, and may journal, in the second area, the at least one piece of journal data buffered in the first area based on a predetermined transaction unit. In this instance, when updating the file data of the first memory 710, the processor may update the file data stored in the first memory 710 based at least on the journal data buffered in the first area or the journal data journaled in the second area.

According to an embodiment, the second memory 720 may include a plurality of random access memories and at least some of the plurality of random access memories may correspond to the first area, and the remaining random access memories may correspond to the second area.

FIGs. 8A and 8B are diagrams illustrating a checkpoint operation according to some of the various embodiments of the disclosure. FIGs. 8A and 8B illustrate a commit operation and a checkpoint operation when an unlink operation is performed after a write and fsync operation is performed with respect to file data. FIGs. 8A and 8B configure different embodiments, respectively.

FIG. 8A illustrates an embodiment in which a journaling area is prepared in a first memory 810 which is a storage device.

When I/O of a file is performed in an application, and when a write and fsync operation with respect to a file is performed sequentially as an operating system operates, a record associated with the write operation may be added to metadata. The processor may commit journal data related to the write operation in the journaling area of the first memory 810, and may record (or cache) data related to the write operation in a main file system area.

Subsequently, when an unlink operation is performed with respect to the corresponding file, the processor may commit journal data related to the unlink operation to the journaling area and may delete (or discard) data from the main file system area.

According to the present embodiment, when records associated with the write and fsync operation and the unlink operation are recorded in the journal data, I/O may be performed in the first memory 810. Additional I/O may be caused by a checkpoint operation to be performed later.

FIG. 8B illustrates an example in which a journaling area is prepared in the second memory 850. As illustrated in FIG. 8B, according to the present embodiment, checkpointing for a first transaction associated with a write and fsync operation and checkpointing for a second transaction associated with a unlink operation may be merged and processed.

When the write and fsync operation is performed with respect to file data, journal data (MW -metadata write 852) related to the corresponding operation may be added to the journaling area of the second memory 850. For example, in this instance, the journal data may be metadata related to the write operation. Subsequently, when the unlink operation is performed with respect to the file data, journal data (MU- metadata update, 854) related to the unlink operation may be committed to the journaling area. For example, in this instance, the journal data may be metadata (metadatunlink (MU)) related to the unlink operation.

According to an embodiment, the processor may delay a time point for checkpointing , may not checkpoint the first transaction associated with the write and fsync operation, and may perform (trigger) checkpointing after the second transaction associated with the unlink operation is committed.

Accordingly, the record associated with the write and fsync operation may be recorded only in the second memory 850 and may not be recorded in the first memory 830. In the main file system area of the first memory 830, only metadata of the final version from which the file is deleted may be stored. That is, only the record (MU 832) associated with the unlink operation may be stored in the metadata of the journal data that is checkpointed in the first memory 830. Accordingly, when compared to FIG. 8A, I/O in the first memory 830 may be performed in association with only the checkpoint for the second transaction. Therefore, the I/O in the first memory 830 may be reduced.

According to an embodiment, the electronic device may perform journaling according to the embodiment of FIG. 8B with respect to file backup data of a DB which is used for securing the integrity of a file, or the like, in a database management program or the like. The electronic device performs a file deletion operation on the file immediately after file update and synchronization. The file may be, for example, a delete mode and truncate mode DB rollback journal file of a database management program (e.g., SQLite), a backup file having an extension named ".bak" of an Android AtomicFile class.

When checkpointing is completed, the electronic device may delete transactions in the order of completion of committing, by updating a pointer of a ring buffer of a journaling area. In this instance, buffers belonging to a completely committed transaction may forcibly perform an I/O process on only a part that a kworker kernel thread does not process, and subsequently, may delete the corresponding transaction of the journaling area.

FIGs. 9A and 9B are diagrams illustrating a checkpoint operation according to some of the various embodiments of the disclosure.

FIGs. 9A and 9B illustrate a commit operation and a checkpoint operation when an unlink operation is repeatedly performed after a write and fsync operation is performed with respect to the same area of a file. FIGs. 9A and 9B configure different embodiments, respectively.

FIG. 9A illustrates an embodiment in which a journaling area is prepared in a first memory 910 which is a storage device.

As illustrated in FIG. 9A, in the case of a predetermined file, a write and fsync operation may be performed repeatedly (N times) with respect to the same area. In this instance, a record associated with each write and fsync operation may be added to metadata, and N transactions may be committed based on the performance of respective operations. Normal data related to the operation may be repeatedly recorded in a main file system area of the first memory 910, at least partially in parallel.

FIG. 9B illustrates an embodiment in which a journaling area is prepared in a second memory. As illustrated in FIG. 9B, checkpoint for a plurality of transactions associated with the write and fsync operation that is repeatedly performed may be merged and processed.

When a first write and fsync operation is performed with respect to a file, journal data (MW) related to the corresponding operation may be added to the journaling area of a second memory 950. Subsequently, when a second write and fsync operation is performed with respect to the same area of the file, journal data (MW) related to the corresponding operation may be added again. That is, in the case of a second transaction 954, data attributable to the second write and fsync operation may be added to metadata of the first transaction 952.

According to an embodiment, the processor may merge checkpointing for a plurality of transactions by delaying a time point for checkpointing . For example, the processor may not checkpoint respective transactions associated with the write and fsync operation that are repeatedly performed. When checkpointing is triggered by the lack of space of the journaling area of the second memory 950, only a transaction 932 of the final version may be recorded in the first memory 930.

Accordingly, the records associated with the write and fsync operation which is performed before the transaction 932 of the final version may be recorded only in the second memory 950 and may not be recorded in the first memory 930. Accordingly, when compared to FIG. 9A, I/O in the first memory 930 may occur in association with only the checkpoint for the last transaction. Therefore, the I/O in the first memory 930 may be reduced.

According to an embodiment, the electronic device may perform journaling according to the embodiment of FIG. 9B with respect to a file of which data at the same area is frequently updated and is repeatedly synchronized. The file may be, for example, a persist mode DB rollback journal file of a database management program, a write-ahead logging (WAL) mode DB journal file, a DB file, an AtomicFile file of an Android AtomicFile class, or the like.

FIG. 10 is a diagram illustrating a time point for checkpointing according to various embodiments of the disclosure.

FIG. 10 illustrate the available capacity of the journaling area of a second memory, and shows that data stored in the second memory increases, that is, the available capacity decreases from left to right.

According to the conventional runtime checkpoint scheme, if memory is insufficient or a predetermined period has come, data that is completely committed to the journaling area of a first memory (or a storage device) are separately and/or sporadically checkpointed via the kworker kernel thread. Therefore, although the space of the journaling area of the memory is sufficient, I/O attributable to checkpoint may forcibly occur depending on a situation.

The electronic device according to various embodiments of the disclosure may perform foreground checkpointing and background checkpointing based on the available capacity of the second memory.

According to various embodiments, if the available capacity of the second memory (e.g., the second memory 430 of FIG. 4) is within a first threshold value (TH1), the processor (e.g., the processor 410 of FIG. 4) may be configured to store (or checkpoint) journal data in the first memory using a process related to the journal data. That is, if journal data is committed to the second memory and the available capacity of the journaling area decreases to be less than the first threshold value, the processor may perform checkpointing at a process context that attempts journaling, so as to secure the available capacity of the journaling area to be greater than or equal to the first threshold value. As described above, checkpointing in association with a process context is referred to as foreground checkpoint.

In the case of the foreground checkpoint, checkpointing is performed at a process context and thus, the execution of a process needs to be temporarily suspended. Accordingly, the operation of the process may be delayed. Therefore, the electronic device according to various embodiments of the disclosure may reduce the occurrence frequency of foreground checkpoint via background checkpoint, in order to reduce the delay of the operation of the process.

According to various embodiments, the electronic device (e.g., the processor 410) may further include a checkpoint performing module that performs (triggers) checkpointing at a kernel context (i.e., thread included in kernel space) instead of a process context. For example, if checkpointing needs to be performed, a checkpoint-dedicated thread (or task) operates and performs checkpointing. As described above, performing checkpointing at a kernel context, as opposed to a process context, is referred to as background checkpoint.

According to various embodiments, if the available capacity of the second memory is within a second threshold value (TH2), the processor may be configured to store (or checkpoint) journal data in the first memory using a kernel thread related to storing the journal data. Here, the second threshold value is greater than the first threshold value. If the available capacity of the second memory is within the second threshold value, the processor initiates background checkpoint so as to secure the available capacity of the second memory to be greater than or equal to a third threshold value (TH3).

Unlike the foreground checkpoint, background checkpoint may be performed at a kworker kernel thread context related to storing journal data. According to an embodiment, when a journaling area is sufficient, journal data that is completely committed may not be exposed to the kworker kernel thread, in order to delay a time point for checkpointing as far as possible. If the available capacity of the journaling area of the second memory is reduced to be less than the second threshold value as journal data is stored, a kernel thread that performs checkpointing may be enabled and background checkpointing is performed until the available capacity reaches the third threshold value.

According to the background checkpoint, checkpointing is performed at a kernel thread context, instead of a process context, and thus, the operation of the process may not be delayed.

An electronic device according to various embodiments of the disclosure may include: a first memory storing file data; a second memory having an attribute different from that of the first memory; and a processor, and the processor is configured to store journal data related to a change in at least a part of the file data in the second memory, wherein the storing operation includes buffering at least a part of the journal data in a first area of the second memory, and journaling at least a part of the journal data in a second area of the second memory, and is configured to update at least the part of the file data stored in the first memory based at least on the journal data if a designated condition is satisfied.

According to various embodiments, the updating operation may include updating at least the part of the file data stored in the first memory based at least on the buffered journal data or the journaled journal data.

According to various embodiments, the second memory may include a plurality of random access memories, including a first random access memory corresponding to the first area and a second random access memory corresponding to the second area.

According to various embodiments, the processor may be configured to store, in the second memory, journal data related to a change in at least a part of a data block and metadata of the file data if the file data corresponds to a designated attribute.

According to various embodiments, the processor may be configured to store, in the second memory, journal data related to a change in at least a part of metadata of the file data if the file data does not correspond to the designated attribute.

According to various embodiments, the processor may be configured to identify whether the file data corresponds to the designated attribute based on at least one of a directory to which the file data belongs, a file name, an extension, and a file size.

According to various embodiments, the processor may be configured to store the journal data in the first memory using a process related to the journal data if available capacity of the second memory is within a first threshold value.

According to various embodiments, the processor may be configured to store the journal data in the first memory using a kernel thread related to storing the journal data if available capacity of the second memory is within a second threshold value which is greater than the first threshold value.

According to various embodiments, the second memory may include at least one random access memory, and at least one memory in the second memory preserves data when the electronic device is powered off.

According to various embodiments, the processor may be configured to update at least the part of the file data stored in the first memory based at least on the journal data when power supply to the electronic device is blocked or when system crash occurs.

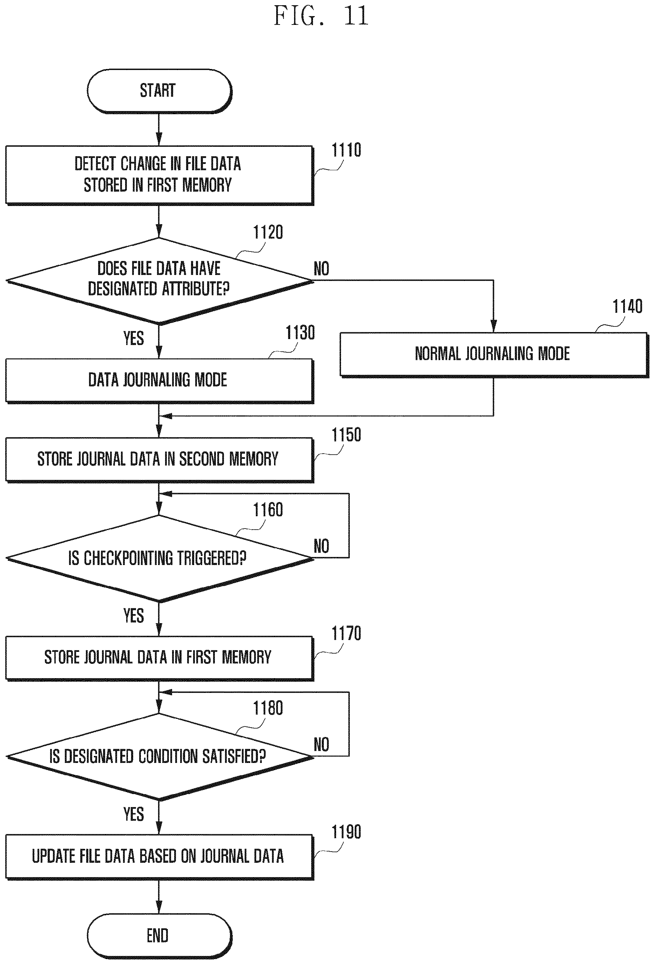

FIG. 11 is a flowchart of a file data journaling method of an electronic device according to various embodiments of the disclosure.

The method may be performed by the electronic device that has been described with reference to FIGs. 1 to 10, and descriptions of the technical features which have been described will be omitted.

According to various embodiments, the electronic device may include a first memory for storing file data and a second memory having an attribute different from that of the first memory. The first memory, which is a non-volatile memory, may be a large capacity storage device. For example, the first memory may include at least one from among an one-time programmable ROM (OTPROM), a PROM, an EPROM, an EEPROM, a mask ROM, a flash ROM, a flash memory, a hard drive, and a solid state drive (SSD). The second memory may be a memory having an attribute different from that of the first memory. The second memory may include the main memory. The second memory, which is capable of preserving data as it is at least a predetermined period of time although sudden power off occurs in the electronic device, may be a part of a battery integrated electronic device and may be continuously provided with power, may be provided with power from an auxiliary battery when the electronic device is powered off since the second memory contains a separate auxiliary battery, may be an RAM having a feature of at least temporarily preserving data, or may be a non-volatile RAM (NVRAM) which is a non-volatile memory.

In operation 1110, the electronic device may detect a change in at least a part of file data stored in the first memory.

In operation 1120, the electronic device (e.g., application) may identify whether the corresponding file data has a designated attribute. According to an embodiment, the electronic device may identify whether the file has the designated attribute based on the extension of the file, a file size, and the like. According to an embodiment, an application of the electronic device (e.g., the application 612 of FIG. 6) may designate an attribute that allows a data journaling operation to be performed with respect to a corresponding file, based on the extension of the file or the like, via a file system call ioctl interface.

If the file has the designated attribute, the electronic device may journal the corresponding file in a data journaling mode in operation 1130. The data journaling mode is a mode that journals the whole file including a data block and metadata.

Unlike the above, if the file does not have the designated attribute, the electronic device may journal the corresponding file in a normal journaling mode in operation 1140. The normal journaling mode is a mode that journal only metadata of file data.

According to an embodiment, the application of the electronic device journals a file that is deleted after file update and synchronization, a file of which the data at the same area of journal data is repeatedly synchronized a plurality of times, or a file having size less than a predetermined threshold value, in the data journaling mode. The file that is deleted after file update and synchronization is file backup data of a DB or the like, which is used for securing the integrity of a file in a database management program or the like. The file may include, for example, a delete mode and truncate mode DB rollback journal file of a database management program (e.g., SQLite), and a backup file having an extension named ".bak" of an Android AtomicFile class. Also, the file of which data at the same area is repeatedly synchronized a plurality of times may include, for example, a persist mode DB rollback journal file of a database management program, a write-ahead logging (WAL) mode DB journal file, a DB file, and an AtomicFile file of an Android AtomicFile class.

In operation 1150, the electronic device may store, in the second memory, journal data related to a change in the file data. In this instance, journal data may be stored in a designated journaling area of the second memory, in units of transactions.

According to an embodiment, the operation of storing may include an operation of buffering at least a part of the journal data in a first area of the second memory, and an operation of journaling at least a part of the journal data in a second area that is different from the first area of the second memory. According to an embodiment, the second memory may include a plurality of random access memories, the first area may correspond to a first random access memory, and the second area may correspond to a second random access memory.

In operation 1160, the electronic device may detect an event of triggering checkpointing.

In operation 1170, the electronic device may store (or checkpoint) at least a part of the journal data in the first memory. Here, the method of checkpointing file data corresponding to the designated attribute may be the same as the descriptions which have been provided with reference to FIGs. 8 and 9.

In operation 1180, the electronic device may identify whether a designated condition is satisfied. Here, the designated condition may include, for example, the case in which power supply to the electronic device is suddenly blocked, or system crash occurs.

In operation 1190, the electronic device may update the file data stored in the first memory based on the journal data.

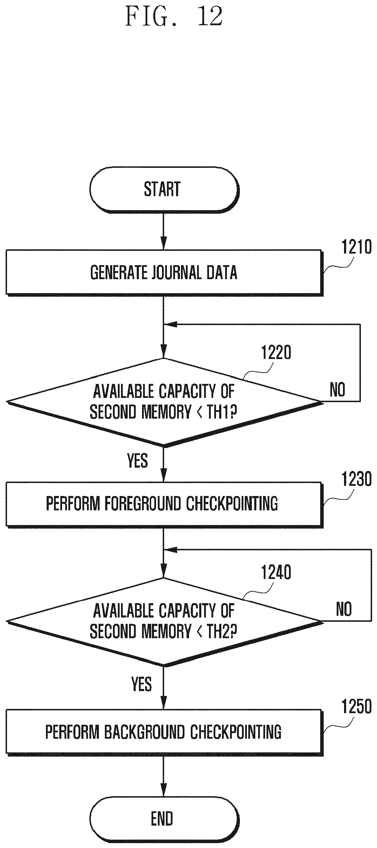

FIG. 12 is a flowchart of a file data journaling method of an electronic device according to various embodiments of the disclosure.

Hereinafter, descriptions of technical features which have been described with reference to FIGs. 1 to 11 will be omitted.

In operation 1210, the electronic device may detect a change in at least a part of file data stored in a first memory, and may store journal data related to the change in the journaling area of a second memory.

In operation 1220, the electronic device may identify whether the available capacity of the second memory is within a first threshold value.

If the available capacity of the second memory is within the first threshold value, the electronic device may perform foreground checkpointing with respect to the journal data stored in the second memory in operation 1230. According to the foreground checkpoint, checkpointing is performed at a process context that attempts journaling, whereby the available capacity of the journaling area may be secured to be greater than or equal to the first threshold value.

In operation 1240, the electronic device may identify whether the available capacity of the second memory is within a second threshold value. The second threshold value may be greater than the first threshold value.

If the available capacity of the second memory is within the second threshold value, the electronic device may perform background checkpointing in operation 1250. Unlike the foreground checkpoint, the background checkpointing may be performed at a kworker kernel thread context related to storing journal data. According to an embodiment, when the journaling area is sufficient, journal data that is completely committed may not be exposed to the kworker kernel thread, in order to delay a time point for checkpointing as far as possible. If the available capacity of the journaling area of the second memory is reduced to be less than the second threshold value since journal data is stored, a kernel thread that performs checkpoint may be enabled and background checkpointing is performed until the available capacity reaches the third threshold value.

The descriptions associated with the foreground checkpoint operation and the background checkpoint operation may be the same as the descriptions which have been provided with reference to FIG. 10.

A method of journaling file data by an electronic device according to various embodiments of the disclosure may include: detecting a change in at least a part of file data stored in a first memory; storing journal data related to the change in a second memory having an attribute different from that of the first memory; and if a designated condition is satisfied, updating at least the part of the file data stored in the first memory, based at least on the journal data, wherein the storing may include buffering at least a part of the journal data in a first area of the second memory, and journaling at least a part of the journal data in a second area of the second memory.

According to various embodiments, the updating operation may include updating at least the part of the file data stored in the first memory, based at least on the buffered journal data or the journaled journal data.

According to various embodiments, the second memory may include a plurality of random access memories, including a first random access memory corresponding to the first area and a second random access memory corresponding to the second area.

According to various embodiments, the method may further include determining whether the file data corresponds to a designated attribute, wherein the storing operation may include storing, in the second memory, journal data related to a change in at least a part of a data block and metadata of the file data if the file data corresponds to the designated attribute.

According to various embodiments, the storing operation may include storing, in the second memory, journal data related to a change in at least a part of metadata of the file data if the file data does not correspond to the designated attribute.

According to various embodiments, the operation of determining whether the file data corresponds to the designated attribute may include identifying whether the file data corresponds to the designated attribute based on at least one of a directory to which the file data belongs, a file name, an extension, and a file size.

According to various embodiments, the operation of storing in the first memory may include storing the journal data in the first memory using a process related to the journal data if available capacity of the second memory is within a first threshold value.

According to various embodiments, the operation of storing in the first memory may include storing the journal data in the first memory using a kernel thread related to storing the journal data if available capacity of the second memory is within a second threshold value that is greater than the first threshold value.

According to various embodiments, the second memory may include at least one random access memory, and at least one memory in the second memory preserves data when the electronic device is powered off.

According to various embodiments, the updating operation may include updating at least the part of the file data stored in the first memory based at least on the journal data when power supply to the electronic device is blocked, or when system crash occurs.

## Claims

1. An electronic device (400), comprising:
a first memory (420) storing file data;
a second memory (430) having an attribute different from that of the first memory (420); and
a processor (410),
wherein the processor (410) is configured to perform:
storing journal data related to a change in at least a part of the file data in the second memory (430), wherein the storing comprises buffering at least a part of the journal data in a first area of the second memory (430), and journaling at least a part of the journal data in a second area of the second memory (430); and
if a designated condition is satisfied, updating at least the part of the file data stored in the first memory (420) based at least on the journal data,
**characterized in that**: the processor (410) is configured to store, in the second memory (430):
journal data related to a change in at least a part of a data block and metadata of the file data if the file data corresponds to a designated attribute; or
journal data related to a change in at least a part of metadata of the file data if the file data does not correspond to the designated attribute.

2. The electronic device (400) of claim 1, wherein the updating comprises updating at least the part of the file data stored in the first memory (420) based at least on the buffered journal data or the journaled journal data.

3. The electronic device (400) of claim 2, wherein the second memory (430) comprises a plurality of random access memories, including a first random access memory corresponding to the first area and a second random access memory corresponding to the second area.

4. The electronic device (400) of any of the previous claims, wherein the processor (410) is configured to identify whether the file data corresponds to the designated attribute based on at least one of a directory to which the file data belongs, a file name, an extension, and a file size.

5. The electronic device (400) of any of the previous claims, wherein the processor (410) is configured to store the journal data in the first memory (420) using a process related to the journal data if available capability of the second memory (430) is within a first threshold value.

6. The electronic device (400) of claim 5, wherein the processor (410) is configured to store the journal data in the first memory (420) using a kernel thread related to storing the journal data if available capacity of the second memory (430) is within a second threshold value which is greater than the first threshold value.

7. The electronic device (400) of any of the previous claims, wherein the second memory (430) comprises at least one random access memory, and
at least one memory in the second memory (430) preserves data when the electronic device (400) is powered off.

8. The electronic device (400) of any of the previous claims, wherein the processor (410) is configured to update at least the part of the file data stored in the first memory (420) based at least on the journal data when power supply to the electronic device (400) is blocked or when system crash occurs.

9. A method of journaling file data by an electronic device (400), the method comprising:
detecting (1110) a change in at least a part of file data stored in a first memory (420);
storing (1150) journal data related to the change in a second memory (430) having an attribute different from that of the first memory (420); and
if a designated condition is satisfied, updating (1190) at least the part of the file data stored in the first memory (420), based at least on the journal data,
wherein the storing comprises buffering at least a part of the journal data in a first area of the second memory (430), and journaling at least a part of the journal data in a second area of the second memory (430);
**characterized in that** the method further comprises determining whether the file data corresponds to a designated attribute, wherein the storing comprises storing, in the second memory (430):
journal data related to a change in at least a part of a data block and metadata of the file data if the file data corresponds to the designated attribute; or
journal data related to a change in at least a part of metadata of the file data if the file data does not correspond to the designated attribute.

10. The method of claim 9, wherein the updating comprises updating at least the part of the file data stored in the first memory (420), based at least on the buffered journal data or the journaled journal data.

11. The method of claim 9 or 10, wherein the storing in the first memory (420) comprises:
if available capacity of the second memory (430) is within a first threshold value, storing the journal data in the first memory (420) using a process related to the journal data.

## Patentansprüche

1. Elektronische Vorrichtung (400), die Folgendes umfasst:
einen ersten Speicher (420), der Dateidaten speichert;
einen zweiten Speicher (430) mit einem Attribut, das sich von dem des ersten Speichers (420) unterscheidet; und
einen Prozessor (410),
wobei der Prozessor (410) konfiguriert ist, um Folgendes durchzuführen:
Speichern von Journaldaten in Verbindung mit einer Änderung bei wenigstens einem Teil der Dateidaten in dem zweiten Speicher (430), wobei das Speichern Folgendes umfasst: Puffern wenigstens eines Teils der Journaldaten in einem ersten Bereich des zweiten Speichers (430), und
Aufzeichnen wenigstens eines Teils der Journaldaten in einem zweiten Bereich des zweiten Speichers (430); und
wenn eine bestimmte Bedingung erfüllt ist, Aktualisieren wenigstens des in dem ersten Speicher (420) gespeicherten Teils der Dateidaten basierend wenigstens auf den Journaldaten,
**dadurch gekennzeichnet, dass** der Prozessor (410) konfiguriert ist, um Folgendes in dem zweiten Speicher (430) zu speichern:
Journaldaten in Verbindung mit einer Änderung bei wenigstens einem Teil eines Datenblocks und Metadaten der Dateidaten, wenn die Dateidaten einem bestimmten Attribut entsprechen; oder
Journaldaten in Verbindung mit einer Änderung bei wenigstens einem Teil der Metadaten der Dateidaten, wenn die Dateidaten nicht dem bestimmten Attribut entsprechen.

2. Elektronische Vorrichtung (400) nach Anspruch 1, wobei das Aktualisieren Folgendes umfasst:
Aktualisieren wenigstens des in dem ersten Speicher (420) gespeichert Teils der Dateidaten basierend auf wenigstens den gepufferten Journaldaten oder den aufgezeichneten Journaldaten.

3. Elektronische Vorrichtung (400) nach Anspruch 2, wobei der zweite Speicher (430) eine Vielzahl von Direktzugriffsspeichern umfasst, einschließlich eines ersten Direktzugriffsspeichers, der dem ersten Bereich entspricht, und eines zweiten Direktzugriffsspeichers, der dem zweiten Bereich entspricht

4. Elektronische Vorrichtung (400) nach einem der vorhergehenden Ansprüche, wobei der Prozessor (410) konfiguriert ist, um zu identifizieren, ob die Dateidaten dem bestimmten Attribut entsprechen, und zwar basierend auf einem Verzeichnis, zu dem die Dateidaten gehören, einem Dateinamen, einer Erweiterung und/oder eine Dateigröße.

5. Elektronische Vorrichtung (400) nach einem der vorhergehenden Ansprüche, wobei der Prozessor (410) konfiguriert ist, um die Journaldaten unter Verwendung eines Prozesses in Verbindung mit den Journaldaten in dem ersten Speicher (420) zu speichern, wenn eine verfügbare Kapazität des zweiten Speichers (430) innerhalb eines ersten Schwellenwertes liegt.

6. Elektronische Vorrichtung (400) nach Anspruch 5, wobei der Prozessor (410) konfiguriert ist, um die Journaldaten unter Verwendung eines Kernel-Threads in Verbindung mit dem Speichern der Journaldaten in dem ersten Speicher (420) zu speichern, wenn die verfügbare Kapazität des zweiten Speichers (430) innerhalb eines zweiten Schwellenwerts liegt, der größer als der erste Schwellenwert ist.

7. Elektronische Vorrichtung (400) nach einem der vorhergehenden Ansprüche, wobei der zweite Speicher (430) wenigstens einen Direktzugriffsspeicher umfasst, und
wenigstens in einem Speicher in dem zweiten Speicher (430) Daten bewahrt werden, wenn die elektronische Vorrichtung (400) ausgeschaltet wird.

8. Elektronische Vorrichtung (400) nach einem der vorhergehenden Ansprüche, wobei der Prozessor (410) konfiguriert ist, um wenigstens den in dem ersten Speicher (420) gespeicherten Teil der Dateidaten basierend wenigstens auf den Journaldaten zu aktualisieren, wenn eine Stromversorgung an die elektronische Vorrichtung (400) blockiert ist oder wenn ein Systemabsturz auftritt.

9. Verfahren zur Aufzeichnung von Dateidaten durch eine elektronische Vorrichtung (400), wobei das Verfahren Folgendes umfasst:
Erfassen (1110) einer Änderung bei wenigstens einem in einem ersten Speicher (420) gespeicherten Teil von Dateidaten;
Speichern (1150) von Journaldaten in Verbindung mit der Änderung bei einem zweiten Speicher (430) mit einem Attribut, das sich von dem des ersten Speichers (420) unterscheidet; und
wenn eine bestimmte Bedingung erfüllt ist, Aktualisieren (1190) wenigstens des in dem ersten Speicher (420) gespeicherten Teils der Dateidaten basierend wenigstens auf den Journaldaten,
wobei das Speichern Folgendes umfasst: Puffern wenigstens eines Teils der Journaldaten in einem ersten Bereich des zweiten Speichers (430), und Aufzeichnen wenigstens eines Teils der Journaldaten in einem zweiten Bereich des zweiten Speichers (430),
**dadurch gekennzeichnet, dass** das Verfahren weiterhin ein Bestimmen umfasst, ob die Dateidaten einem bestimmten Attribut entsprechen, wobei das Speichern ein Speichern von Folgendem in dem zweiten Speicher (430) umfasst:
Journaldaten in Verbindung mit einer Änderung bei wenigstens einem Teil eines Datenblocks und Metadaten der Dateidaten, wenn die Dateidaten dem bestimmten Attribut entsprechen; oder
Journaldaten in Verbindung mit einer Änderung bei wenigstens einem Teil der Metadaten der Dateidaten, wenn die Dateidaten nicht dem bestimmten Attribut entsprechen.

10. Verfahren nach Anspruch 9, wobei das Aktualisieren Folgendes umfasst: Aktualisieren wenigstens des in dem ersten Speicher (420) gespeicherten Teils der Dateidaten basierend auf wenigstens den gepufferten Journaldaten oder den aufgezeichneten Journaldaten.

11. Verfahren nach Anspruch 9 oder 10, wobei das Speichern in dem ersten Speicher (420) Folgendes umfasst:
wenn die verfügbare Kapazität des zweiten Speichers (430) innerhalb eines ersten Schwellenwerts liegt, Speichern der Journaldaten in dem ersten Speicher (420) unter Verwendung eines Prozesses in Verbindung mit den Journaldaten.

## Revendications

1. Appareil électronique (400), comprenant :
une première mémoire (420) dans laquelle sont enregistrées des données de fichier,
une deuxième mémoire (430) ayant un attribut différent de celui de la première mémoire (420), et
un processeur (410) ;
le processeur (410) étant conçu pour réaliser :
l'enregistrement, dans la deuxième mémoire (430), de données de journal en lien avec un changement concernant au moins une partie des données de fichier, ledit enregistrement comprenant la mise en mémoire tampon d'au moins une partie des données de journal dans une première zone de la deuxième mémoire (430), et la journalisation d'au moins une partie des données de journal dans une deuxième zone de la deuxième mémoire (430), et
si une certaine condition est satisfaite, l'actualisation au moins de la partie des données de fichier enregistrées dans la première mémoire (420) en fonction au moins des données de journal ;
**caractérisé en ce que** le processeur (410) est conçu pour enregistrer, dans la deuxième mémoire (430) :
des données de journal en lien avec un changement concernant au moins une partie d'un bloc de données et des métadonnées des données de fichier si les données de fichier correspondent à un certain attribut, ou bien
des données de journal en lien avec un changement concernant au moins une partie des métadonnées des données de fichier si les données de fichier ne correspondent pas audit certain attribut.

2. Appareil électronique (400) selon la revendication 1, dans lequel l'actualisation comprend l'actualisation d'au moins la partie des données de fichier enregistrées dans la première mémoire (420) en fonction au moins des données de journal mises en mémoire tampon ou des données de journal journalisées.

3. Appareil électronique (400) selon la revendication 2, dans lequel la deuxième mémoire (430) comprend une pluralité de mémoires vives, dont une première mémoire vive correspondant à la première zone et une deuxième mémoire vive correspondant à la deuxième zone.

4. Appareil électronique (400) selon l'une quelconque des revendications précédentes, dans lequel le processeur (410) est conçu pour identifier si les données de fichier correspondent audit certain attribut en fonction d'un répertoire auquel appartiennent les données de fichier, du nom du fichier, d'une extension et/ou de la taille du fichier.

5. Appareil électronique (400) selon l'une quelconque des revendications précédentes, dans lequel le processeur (410) est conçu pour enregistrer les données de journal dans la première mémoire (420) au moyen d'un processus en lien avec les données de journal si la capacité disponible de la deuxième mémoire (430) se trouve dans les limites d'une première valeur seuil.

6. Appareil électronique (400) selon la revendication 5, dans lequel le processeur (410) est conçu pour enregistrer les données de journal dans la première mémoire (420) à l'aide d'un thread de noyau en lien avec l'enregistrement des données de journal si la capacité disponible de la deuxième mémoire (430) se trouve dans les limites d'une deuxième valeur seuil qui est supérieure à la première valeur seuil.

7. Appareil électronique (400) selon l'une quelconque des revendications précédentes, dans lequel la deuxième mémoire (430) comprend au moins une mémoire vive, et
au moins une mémoire présente dans la deuxième mémoire (430) préserve les données lorsque l'appareil électronique (400) est éteint.

8. Appareil électronique (400) selon l'une quelconque des revendications précédentes, dans lequel le processeur (410) est conçu pour actualiser au moins la partie des données de fichier enregistrées dans la première mémoire (420) en fonction au moins des données de journal lorsque l'alimentation de l'appareil électronique (400) est bloquée ou lorsqu'il se produit un plantage du système.

9. Procédé de journalisation de données de fichier par un appareil électronique (400), le procédé comprenant les opérations consistant à :
détecter (1110) un changement concernant au moins une partie des données de fichier enregistrées dans une première mémoire (420),
enregistrer (1150) des données de journal en lien avec le changement concernant une deuxième mémoire (430) ayant un attribut différent de celui de la première mémoire (420), et
si une certaine condition est satisfaite, actualiser (1190) au moins la partie des données de fichier enregistrées dans la première mémoire (420), en fonction au moins des données de journal ;
ledit enregistrement comprenant la mise en mémoire tampon d'au moins une partie des données de journal dans une première zone de la deuxième mémoire (430), et la journalisation d'au moins une partie des données de journal dans une deuxième zone de la deuxième mémoire (430),
**caractérisé en ce que** le procédé comprend en outre la détermination du fait ou non que les données de fichier correspondent à un certain attribut, ladite opération d'enregistrement comprenant l'enregistrement, dans la deuxième mémoire (430) :
de données de journal en lien avec un changement concernant au moins une partie d'un bloc de données et des métadonnées des données de fichier si les données de fichier correspondent à un certain attribut, ou bien
de données de journal en lien avec un changement concernant au moins une partie des métadonnées des données de fichier si les données de fichier ne correspondent pas audit certain attribut.

10. Procédé selon la revendication 9, dans lequel l'actualisation comprend l'actualisation d'au moins la partie des données de fichier enregistrées dans la première mémoire (420), en fonction au moins des données de journal mises en mémoire tampon ou des données de journal journalisées.

11. Procédé selon la revendication 9 ou 10, dans lequel l'enregistrement dans la première mémoire (420) comprend :
si la capacité disponible de la deuxième mémoire (430) se trouve dans les limites d'une première valeur seuil, l'enregistrement des données de journal dans la première mémoire (420) au moyen d'un processus en lien avec les données de journal.
